# EUROPEAN PATENT APPLICATION

(11) **EP 4 636 862 A1**
(43) Date of publication of application: **22.10.2025**
(21) Application number: 23903400.2
(22) Date of filing: 07.12.2023
(51) Int. Cl.: H01M 4/52, C01G 53/00, H01M 4/36, H01M 4/50

(54) **PRECURSOR OF POSITIVE ELECTRODE ACTIVE MATERIAL FOR LITHIUM ION SECONDARY BATTERIES, AND INTERMEDIATE**

(30) Priority: 12.12.2022 JP 2022198056
(71) Applicant: SUMITOMO METAL MINING CO., LTD., Tokyo 105-8716 (JP)
(72) Inventor: IZUMITANI, Rin, Niihama-shi, Ehime 792-0002 (JP)
(74) Representative: Müller-Boré & Partner Patentanwälte PartG mbB
(86) International application number: PCT/JP2023/043784
(87) International publication number: WO 2024/128113

(57) **Abstract**

Provided is a precursor and an intermediate for obtaining a positive electrode active material for a lithium ion secondary battery excellent in particle strength while maintaining favorable battery characteristics.

The precursor of a positive electrode active material for a lithium ion secondary battery, the positive electrode active material including a lithium-metal composite oxide composed of secondary particles formed by aggregation of primary particles or both the primary particles and the secondary particles. The precursor is a metal composite hydroxide composed of the secondary particles formed by aggregation of the primary particles or both the primary particles and the secondary particles. The secondary particles each include a core occupying an inside of the secondary particle and a shell section surrounding the core and covering its outside. The core has the porous structure and the shell section has the solid structure. The metal composite hydroxide contains nickel, manganese, and cobalt, and has a pore volume of 0.2 **to 0.5** ml/g and an average pore size of 11.5 to 15.0 nm.

## Description

### Technical Field

The present invention relates to a precursor and an intermediate of a positive electrode active material for a lithium ion secondary battery.

### Background Art

In recent years, clean energy automobiles that are friendly to a global environment, such as a hybrid electric vehicle (HEV), a plug-in hybrid electric vehicle (PHEV), and an electric vehicle (EV), which emit less carbon dioxide, are becoming widespread from a viewpoint of protecting the global environment. Among batteries used in these clean energy vehicles, a lithium ion secondary battery is still being developed because it is excellent in output characteristics, charge and discharge cycle characteristics, and the like.

In addition, while it is difficult to newly build a thermal power plant for burning a fossil fuel, as one effective use method of power in order to cope with an increase in power demand, load leveling is performed in which night power that can be surplus power is stored in a lithium ion secondary battery installed in a general home and used in a daytime when power consumption is large to level a load.

Furthermore, efforts to use a household storage battery constituted by a lithium ion secondary battery together with a photovoltaic power generation system have also gradually expanded. Stored clean power can be used not only in a daytime but also at night, and is also largely expected as an emergency power source when a power failure occurs due to a disaster such as an earthquake or a typhoon.

A lithium ion secondary battery using a lithium-metal composite oxide having a layered or spinel-type crystal structure as a positive electrode active material of such a lithium ion secondary battery can obtain a high voltage of about 4 V, and thus has been put into practical use as a secondary battery exhibiting a high energy density.

As the lithium-metal composite oxide, not only a lithium-cobalt composite oxide (LiCoO₂) which is relatively easily manufactured, but also a lithium-nickel composite oxide (LiNiO₂) using nickel cheaper than cobalt, a lithium-manganese composite oxide (LiMn₂O₄) using manganese, a lithium-nickel-manganese composite oxide (LiNi_{0.5}Mn_{0.5}O₂), a lithium-nickel-manganese-cobalt composite oxide (for example, LiNi_{1/3}Mn_{1/3}Co_{1/3}O₂), a lithium-nickel-cobalt-aluminum composite oxide (for example, LiNi_{0.75}Co_{0.15}Al_{0.10}O₂), and the like have been proposed.

Among these lithium-metal composite oxides, a positive electrode active material including a lithium-nickel-cobalt-aluminum composite oxide (NCA) containing nickel, cobalt, and aluminum at a specific ratio, or a lithium-nickel-manganese-cobalt composite oxide (NMC) containing nickel, manganese, and cobalt at a specific ratio has attracted particular attention as a material having excellent thermal stability, a high capacity, favorable cycle characteristics, low resistance, and a high output.

In addition, for the purpose of obtaining a positive electrode active material having high performance when the lithium-metal composite oxide is used in a lithium ion secondary battery, some techniques focusing on a particle structure of the lithium-metal composite oxide have been disclosed.

Patent Literature 1 discloses a positive electrode active material for a non-aqueous electrolyte secondary battery capable of reducing positive electrode resistance, the positive electrode active material including a lithium-nickel-manganese composite oxide represented by a general formula: Li₁₊ᵤNiₓMn_{y}Co_{z}MₜO₂ (-0.05 ≤ u ≤ 0.50, x + y + z + t = 1, 0.3 ≤ x ≤ 0.7, 0.1 ≤ y ≤ 0.55, 0 ≤ z ≤ 0.4, 0 ≤ t ≤ 0.1, M is an additive element and one or more elements selected from Mg, Ca, Al, Ti, V, Cr, Zr, Nb, Mo, and W) and formed of a hexagonal lithium-containing composite oxide having a layered structure, in which an average particle size is 2 to 8 µm, [(d90 - d10)/average particle size] as an index indicating a spread of particle size distribution is 0.60 or less, a specific surface area is 1 to 2 m²/g, the positive electrode active material has a hollow structure including a hollow portion inside a particle and an outer shell section outside the hollow portion, and the outer shell section has a thickness of 0.5 to 2.5 µm.

Patent Literature 2 discloses a positive electrode active material for a non-aqueous electrolyte secondary battery excellent in coulombic efficiency and reaction resistance, including a lithium-nickel-manganese composite oxide represented by a general formula: LiₐNiₓMn_{y}Co_{z}MₜO₂ (0.95 ≤ a ≤ 1.20, 0.2 ≤ x ≤ 0.8, 0 ≤ y<0.3, 0.07<z ≤ 0.8, 0 ≤ t ≤ 0.1, and x + y + z + t = 1 are satisfied, and M is at least one element selected from Mg, Ca, Ba, Sr, Al, Ti, V, Cr, Zr, Mo, Hf, Ta, and W), and having a hollow or porous structure, in which a sulfate radical content is 0.4% by mass or less, and a sodium content is 0.035% by mass or less.

Patent Literature 3 discloses a positive electrode active material for a lithium battery, formed of a particle having a porous structure in which pores are distributed over the entire internal region of a secondary particle formed of an aggregate of primary particles, in which the pores are radially distributed from a center of the secondary particle, and thus has a large specific surface area, and as a result, an electrolyte solution easily flows into the pores and movement resistance of lithium ions is thus reduced, thereby making it possible to manufacturing a secondary battery having high output characteristics.

Patent Literature 4 discloses, as a positive electrode active material for a lithium secondary battery having excellent rate characteristics, a positive electrode active material for a lithium secondary battery, containing a secondary particle formed by aggregation of a plurality of primary particles of a lithium composite metal oxide, in which the secondary particle has a void formed therein and a through-hole connecting the void and a surfaces of the secondary particle, and satisfies all of the following (i) to (iii).
(i) In a cross section of the secondary particle, a ratio of a short axis length B of a figure surrounded by an outer edge of the cross section to a long axis length A of the figure (B/A) is 0.75 or more and 1.0 or less.
(ii) A ratio of a total area of the voids exposed to the cross section to an area of the figure is 2.0% or more and 40% or less.
(iii) A ratio of an area of a void present in a center of the secondary particle in the voids exposed to the cross section to the total area of the voids exposed to the cross section is 60% or more and 99% or less. (Note that the long axis length is a longest diameter among diameters of the figure passing through a gravity center position of the figure in the figure.) When an area of the figure is represented by S, the center is a portion surrounded by a circle centered on a gravity center position of the figure and having a radius r calculated by a formula "r = (S/π)^{0.5}/2".

### Citation List

### Patent Literature

Patent Literature 1: JP 2012-254889 A
Patent Literature 2: WO 2015-146598 A
Patent Literature 3: JP 2017-533571 A
Patent Literature 4: JP 2019-096406 A

### Summary of Invention

### Technical Problem

However, Patent Literatures 1 to 4 each have a problem that a particle itself is reduced in strength and sufficient durability cannot be thus achieved, as the result of a lithium-metal composite oxide having a high porosity or a particle structure such as the hollow, porous, or multilayer structure in order to improve battery characteristics. Nevertheless, no solution to this problem has been clarified at all so far.

Therefore, the present inventor has intensively studied, and found that the above problem can be solved by forming a shell section excellent in particle strength with respect to a core having a high porosity or the particle structure such as the hollow, porous, or multilayer structure.

The present invention has been made in view of the above problem, and an object thereof is to provide a precursor and an intermediate for obtaining a positive electrode active material for a lithium ion secondary battery excellent in particle strength while maintaining favorable battery characteristics.

### Solution to Problem

In particular, according to one aspect of the present invention for solving the above problem, a first aspect of the present invention is a precursor of a positive electrode active material for a lithium ion secondary battery, the positive electrode active material including a lithium-metal composite oxide that is composed of secondary particles formed by aggregation of primary particles or both the primary particles and the secondary particles, in which the precursor is a metal composite hydroxide composed of the secondary particles formed by aggregation of the primary particles or both the primary particles and the secondary particles, the secondary particles each have a core occupying an inside of the secondary particle and a shell section surrounding the core and covering an outside thereof, the core has a porous structure and the shell section has a solid structure, the metal composite hydroxide contains nickel, manganese, and cobalt, and the metal composite hydroxide has a pore volume of 0.2 to 0.5 ml/g and an average pore size of 11.5 to 15.0 nm.

A second aspect of the present invention is the precursor of a positive electrode active material for a lithium ion secondary battery according to the first aspect of the present invention, in which in a particle structure observed by imaging a cross section of the secondary particle of the metal composite hydroxide, the porous structure exhibits a cross-sectional state in which two or more pores are present in the particle's cross section, and the solid structure exhibits a cross-sectional state in which the particle's cross section is in a filled state.

A third aspect of the present invention is the precursor of a positive electrode active material for a lithium ion secondary battery according to the first or second aspect of the present invention, in which the metal composite hydroxide has an average particle size of 3 to 8 µm.

A fourth aspect of the present invention is the precursor of a positive electrode active material for a lithium ion secondary battery according to the first or second aspect of the present invention, in which the metal composite hydroxide has a specific surface area of 35 to 55 m²/g, a tap density of 0.5 to 1 g/cm³, and an oil absorption amount of 40 to 70 ml/100 g.

A fifth aspect of the present invention is the precursor of a positive electrode active material for a lithium ion secondary battery according to the first or second aspect of the present invention, in which the metal composite hydroxide is represented by a general formula A: Ni_{1-x-y-z}MnₓCo_{y}M_{z}(OH)_{2+α} (0.01 ≤ x ≤ 0.5, 0.01 ≤ y ≤ 0.5, 0 ≤ z ≤ 0.1, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S).

A sixth aspect of the present invention is an intermediate of a positive electrode active material for a lithium ion secondary battery, the positive electrode active material including a lithium-metal composite oxide that is composed of secondary particles formed by aggregation of primary particles or both the primary particles and the secondary particles, in which the intermediate is a metal composite oxide composed of the secondary particles formed by aggregation of the primary particles or both the primary particles and the secondary particles, the secondary particles each have a core occupying an inside of the secondary particle and a shell section surrounding the core and covering an outside thereof, the core has a porous structure and the shell section has a solid structure, and the metal composite oxide is represented by a general formula B: Ni_{1-x-y-z}MnₓCo_{y}M_{z}O_{1+α} (0.01 ≤ x ≤ 0.5, 0.01 ≤ y ≤ 0.5, 0 ≤ z ≤ 0.1, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S).

### Advantageous Effects of Invention

It is possible to provide a precursor and an intermediate for obtaining a positive electrode active material for a lithium ion secondary battery excellent in particle strength while maintaining favorable battery characteristics.

### Brief Description of Drawings

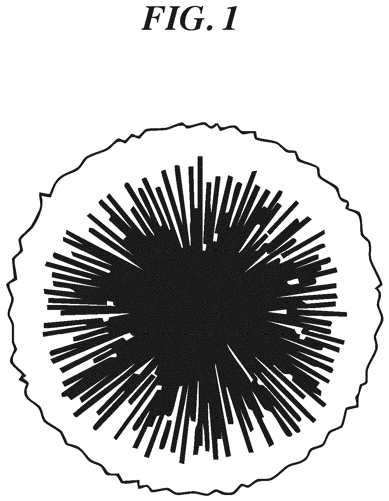

Fig. 1 is an image view of a cross section of a metal composite hydroxide (precursor) according to the present invention.

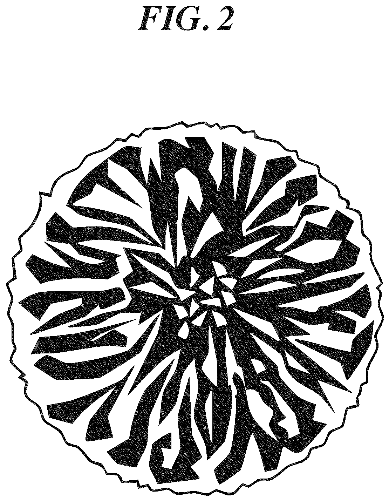

Fig. 2 is an image view of a cross section of a lithium-metal composite oxide according to the present invention.
Fig. 3 is a schematic cross sectional view of a coin-type battery used for evaluation of battery characteristics according to the present invention.

### Description of Embodiments

A precursor and an intermediate of a positive electrode active material for a lithium ion secondary battery according to the present embodiment will be described in detail below.

Note that the present invention is not limited to contents in the following description, and can include various modified examples and alternative examples without departing from the gist of the present invention.

### <Precursor of positive electrode active material for lithium ion secondary battery>

The present invention provides a precursor of a positive electrode active material for a lithium ion secondary battery, the positive electrode active material including a lithium-metal composite oxide constituted by secondary particles obtained by aggregation of primary particles or both the primary particles and the secondary particles. The precursor is a metal composite hydroxide constituted by secondary particles obtained by aggregation of primary particles or both the primary particles and the secondary particles, the secondary particles each include a core occupying an inside of the secondary particle and a shell section surrounding the core and covering its outside, the core has the porous structure and the shell section has the solid structure, the metal composite hydroxide contains nickel, manganese, and cobalt, and the metal composite hydroxide has a pore volume of 0.2 to 0.5 ml/g and an average pore size of 11.5 to 15.0 nm.

### (1) Composition

The metal composite hydroxide serving as a precursor of a positive electrode active material according to the embodiment of the present invention contains nickel, manganese, and cobalt, and is specifically represented by a general formula A: Ni_{1-x-y-z}MnₓCo_{y}M_{z}(OH)_{2+α} (0.01 ≤ x ≤ 0.5, 0.01 ≤ y ≤ 0.5, 0 ≤ z ≤ 0.1, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S). A critical significance thereof is described as follows.

"1-x-y-z" indicating a molar ratio of nickel (Ni) is in a range of preferably 0.2 to 0.98, more preferably 0.25 to 0.95, particularly preferably 0.3 to 0.93. Within the above range, when a lithium-metal composite oxide obtained from the precursor is used as a positive electrode active material, higher potential and capacity enlargement of a lithium ion secondary battery can be achieved. On the other hand, when "1-x-y-z" is less than 0.2, higher potential and capacity enlargement cannot be sufficiently achieved, and when "1-x-y-z" is more than 0.98, molar ratios of other elements decrease, and effects of the other elements cannot be sufficiently obtained.

"x" indicating a molar ratio of manganese (Mn) is in a range of preferably 0.01 to 0.5, more preferably 0.05 to 0.45, particularly preferably 0.1 to 0.4. Within the above range, when a lithium-metal composite oxide obtained from the precursor is used as a positive electrode active material, thermal stability of a lithium ion secondary battery can be improved. On the other hand, when "x" is less than 0.01, thermal stability cannot be sufficiently improved, and when "x" is more than 0.5, manganese may be eluted from the positive electrode active material during high-temperature operation, and cycle characteristics may be deteriorated.

"y" indicating a molar ratio of cobalt (Co) is in a range of preferably 0.01 to 0.5, more preferably 0.05 to 0.45, particularly preferably 0.1 to 0.4. Within the above range, when a lithium-metal composite oxide obtained from the precursor is used as a positive electrode active material, cycle characteristics of a lithium ion secondary battery can be improved. On the other hand, when "y" is less than 0.01, an effect of reducing an expansion and shrinkage behavior of a crystal lattice is insufficient, and cycle characteristics cannot be sufficiently improved, and when "y" is more than 0.5, the addition amount of cobalt is too large, and an initial discharge capacity is largely reduced.

M is an element that contributes to output characteristics, durability, stability, and the like of a lithium ion secondary battery, and is optionally added. A value of "z" indicating a molar ratio of M may be 0, but in order to sufficiently obtain the above-described effect, the value of "z" is in a range of preferably more than 0 and 0.1 or less, more preferably more than 0 and 0.05 or less, particularly preferably more than 0 and 0.01 or less. When the value of "z" is 0, output characteristics, durability, stability, and the like of a lithium ion secondary battery cannot be improved. On the other hand, when the value of "z" is more than 0.1, molar ratios of other elements decrease, and effects of the other elements cannot be sufficiently obtained.

As such M, one or more selected from tungsten (W), molybdenum (Mo), vanadium (V), calcium (Ca), magnesium (Mg), strontium (Sr), barium (Ba), titanium (Ti), chromium (Cr), zirconium (Zr), aluminum (Al), niobium (Nb), tantalum (Ta), silicon (Si), phosphorus (P), boron (B), and sulfur (S) can be used.

### (2) Pore volume

In the metal composite hydroxide serving as a precursor of a positive electrode active material according to the embodiment of the present invention, a pore volume is in a range of preferably 0.2 to 0.5 ml/g, more preferably 0.2 to 0.48 ml/g, particularly preferably 0.2 to 0.46 ml/g.

Within the above range, when a lithium-metal composite oxide obtained from the precursor is used as a positive electrode active material, sintering between the primary particles can be suppressed to moderate the strength of the secondary particles, and an increase in resistance, a decrease in capacity, and particle cracking caused by a decrease in specific surface area can be suppressed to further improve cycle characteristics. When the pore volume is less than 0.2 ml/g, a filling property as a positive electrode active material is insufficient, and when the pore volume is more than 0.5 ml/g, the strength of the secondary particles is insufficient.

### (3) Average pore size

In the metal composite hydroxide serving as a precursor of a positive electrode active material according to the embodiment of the present invention, an average pore size is in a range of preferably 11.5 to 15.0 nm, more preferably 11.8 to 14.8 nm, particularly preferably 12.0 to 14.5 nm.

Within the above range, when a lithium-metal composite oxide obtained from the precursor is used as a positive electrode active material, sintering between the primary particles can be suppressed to moderate the strength of the secondary particles, and an increase in resistance, a decrease in capacity, and particle cracking caused by a decrease in specific surface area can be suppressed to further improve cycle characteristics. When the average pore size is less than 11.5 nm, a filling property as a positive electrode active material is insufficient, and when the average pore size exceeds 15.0 nm, the strength of the secondary particles is insufficient.

### (4) Particle form and particle internal structure

A most part of the metal composite hydroxide serving as a precursor of a positive electrode active material according to the embodiment of the present invention has the form of a secondary particle in which a plurality of primary particles is aggregated, however, the metal composite hydroxide may partially contain a primary particle in a state of not being aggregated as a secondary particle.

The shapes of the primary particles constituting the secondary particle and the primary particle present alone are not particularly limited, and various shapes such as a spherical shape, a plate shape, a needle shape, a rectangular parallelepiped shape, an elliptical shape, and a rhombohedral shape can be taken. In addition, the aggregation form of primary particles is not particularly limited, and it can take various forms including a form in which the primary particles are aggregated in a random direction and a form in which the primary particles are aggregated substantially uniformly and radially from a center to form a secondary particle having a substantially spherical shape or an ellipsoidal shape.

The precursor of the lithium-metal composite oxide having the form of the secondary particle described above includes a particle which adopts the porous structure at a core occupying the inside of the particle and the solid structure at a shell section surrounding the core and covering the outside of the core.

Here, the porous structure refers to a structure indicating a cross-sectional state in which the particle's cross section includes two or more pores in a particle's cross-sectional structure observed by imaging a cross section of the secondary particle of the lithium-metal composite oxide, namely, a structure in which many pores are dispersed throughout the inside of the secondary particle. On the other hand, the solid structure refers to a structure indicating a cross-sectional structure in which a particle's cross section is in a filled state.

When the secondary particles are used, it is possible to finally obtain a positive electrode active material for a lithium ion secondary battery excellent in particle strength while maintaining favorable battery characteristics.

### (5) Average particle size (MV)

In the metal composite hydroxide serving as a precursor of a positive electrode active material according to the embodiment of the present invention, an average particle size (MV) of the secondary particles is in a range of preferably 3 to 8 µm, more preferably 3.5 to 7.5 µm, particularly preferably 4 to 7 µm. Within the above range, in a secondary battery in which a lithium-metal composite oxide obtained from the precursor is incorporated in a positive electrode as a positive electrode active material, a battery capacity per volume can be increased, safety is improved, and cycle characteristics are favorable. However, when the average particle size is less than 3 µm, a prepared positive electrode has a decreased filling density of the particles and a battery capacity per volume of the positive electrode deteriorates. When the average particle size is more than 8 µm, a specific surface area of the positive electrode active material decreases and an interface with an electrolyte solution of a secondary battery decreases, and as a result, resistance of the positive electrode increases and output characteristics of the battery deteriorate.

### (6) Specific surface area

In the metal composite hydroxide serving as a precursor of a positive electrode active material according to the embodiment of the present invention, a specific surface area is in a range of preferably 35 to 55 m²/g, more preferably 36 to 54 m²/g, particularly preferably 37 to 53 m²/g. Within the above range, when a lithium-metal composite oxide obtained from the precursor is used as a positive electrode active material, it sufficiently ensures a particle contact surface that can be in contact with an electrolyte solution. When the specific surface area is less than 35 m²/g, the particle contact surface is too small, thereby making it impossible to achieve a charge and discharge capacity as particles having the porous structure. When the specific surface area is more than 55 m²/g, the particle contact surface is too large, and surface activity may be too high.

### (7) Tap density

In the metal composite hydroxide serving as a precursor of a positive electrode active material according to the embodiment of the present invention, a tap density is in a range of preferably 0.5 to 1 g/cm³, more preferably 0.6 to 1 g/cm³, particularly preferably 0.7 to 1 g/cm³. Within the above range, when a lithium-metal composite oxide obtained from the precursor is used as a positive electrode active material, it is possible to improve in both a battery capacity per unit volume and cycle characteristics of a secondary battery. When the tap density is less than 0.5 g/cm³, a filling property as a positive electrode active material is low, and therefore a charge and discharge capacity cannot be sufficiently improved. When the tap density is more than 1 g/cm³, a specific surface area as the positive electrode active material decreases, and therefore a reaction area with an electrolyte solution decreases, thereby resulting in insufficiently improved output characteristics.

### (8) Oil absorption amount

In the metal composite hydroxide serving as a precursor of a positive electrode active material according to the embodiment of the present invention, an oil absorption amount is in a range of preferably 40 to 70 ml/100 g, more preferably 41 to 69 ml/100 g, particularly preferably 42 to 68 ml/100 g. Within the above range, when the metal composite hydroxide is used as a positive electrode active material, it sufficiently ensures a particle contact surface that can be in contact with an electrolyte solution. When the oil absorption amount is less than 40 ml/100 **g,** the particle contact surface is too small, thereby making it impossible to achieve a charge and discharge capacity as particles having the porous structure. When the oil absorption amount is more than 70 ml/100 g, the particle contact surface is too large, and surface activity may be too high.

### <Intermediate of positive electrode active material for lithium ion secondary battery>

The present invention provides an intermediate of a positive electrode active material for a lithium ion secondary battery, in which the intermediate is a metal composite oxide serving as an intermediate of a lithium-metal composite oxide constituted by secondary particles obtained by aggregation of primary particles or both the primary particles and the secondary particles. The secondary particles each include a core and a shell section, and the core has the porous structure and the shell section has the solid structure. The metal composite oxide is represented by a general formula B: Ni_{1-x-y-z}MnₓCo_{y}M_{z}O_{1+α} (0.01 ≤ x ≤ 0.5, 0.01 ≤ y ≤ 0.5, 0 ≤ z ≤ 0.1, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S).

In this regard, a precursor, an intermediate, or a mixture thereof can be used for firing for obtaining the lithium-metal composite oxide.

### (1) Composition

The metal composite hydroxide serving as an intermediate of a positive electrode active material according to the embodiment of the present invention preferably has a composition represented by the general formula B. When the intermediate having this composition is used for a positive electrode active material, eventually for a lithium ion secondary battery, the obtained lithium ion secondary battery achieves excellent battery characteristics such as a battery capacity (charge and discharge capacity). As to molar ratios (contents) of nickel, manganese, cobalt, and optionally added M, and critical significances thereof, the same applies as those described for the precursor as above.

### (2) Particle form and particle internal structure

As for the particle form and the particle internal structure in the metal composite hydroxide serving as an intermediate of a positive electrode active material according to the embodiment of the present invention, the core of the secondary particle has the porous structure and the shell section has the solid structure, and the characteristics of the precursor are substantially inherited.

### Examples

Hereinafter, the present invention will be specifically described using Examples and Comparative Examples. In the Examples and Comparative Examples described below, reagents manufactured by FUJIFILM Wako Pure Chemical Corporation were used unless otherwise specified. Furthermore, the present invention is not limited by the Examples and Comparative Examples at all.

Followings are various evaluation methods and a battery evaluation method used in Examples and Comparative Examples.

### (Various evaluation methods)

### (1) Composition

A composition was determined by thermally decomposing a sample with an inorganic acid to obtain an analysis specimen solution, and subjecting the analysis specimen solution to measurement using a multi-type ICP emission spectrometer, ICPE-9000 (manufactured by Shimadzu Corporation).

### (2) Pore volume

A pore volume was determined by analyzing a sample by a nitrogen gas adsorption and desorption method based on a Barrett-Joyner-Halenda method (BJH method). For measurement, an independent four-station type specific surface area and pore distribution measuring apparatus, QUADRASORB-SI (manufactured by Quantachrome Instruments), was used.

### (3) Average pore size

An average pore size was determined by analyzing a sample by a nitrogen gas adsorption and desorption method based on a Barrett-Joyner-Halenda method (BJH method). For measurement, an independent four-station type specific surface area and pore distribution measuring apparatus, QUADRASORB-SI (manufactured by Quantachrome Instruments), was used.

### (4) Particle structure

As for a particle structure, a cross-section preparation device, Cross-section Polisher IB-19530CP (manufactured by JEOL Ltd.), was used for cutting a sample particle, and a Schottky field emission scanning electron microscope (SEM-EDS), JSM-7001F (manufactured by JEOL Ltd.), was used for observing the cross section.

### (5) Average particle size

An average particle size (MV) was determined from a volume-based distribution obtained by subjecting a sample to measurement by a laser diffraction and scattering method. As to a measuring apparatus, a laser diffraction and scattering type particle size distribution measuring apparatus equipped with an ultrasonic generator, Microtrac MT3300EX-II (manufactured by Microtrac Bell Co., Ltd.), was used.

### (6) Specific surface area

A specific surface area was determined by analyzing a sample by a nitrogen gas adsorption and desorption method by a BET 1-point method. For measurement, a gas flow type specific surface area measuring apparatus, MackSorb 1200 series (manufactured by Mountech Co., Ltd.), was used.

### (7) Tap density

A tap density was determined by collecting 12 g of a sample in a measuring cylinder having a capacity of 20 ml, mounting the measuring cylinder on a shaking specific gravity meter, KRS-409 (manufactured by Kuramochi Kagaku Kikai Seisakusho Co., Ltd.), and then repeating an operation of freely dropping the sample from a position of 2 cm in height 500 times.

### (8) Oil absorption amount

An oil absorption amount was determined as a dibutyl phthalate or di-n-butyl phthalate (DBP) absorption amount by using DBP as a reagent liquid and performing measurement with an absorption amount measuring device in accordance with "JIS_K_6217-4:2008 (carbon black for rubber - basic characteristics - Part 4: How to obtain oil absorption amount (including compressed sample))". Since a measurement result is calculated as an absorption amount per 100 g of the sample, a unit is represented by "ml/100 g". For the measurement, S-500 (manufactured by Asahi Soken Co., Ltd.) was used.

### (Battery evaluation method)

### (1) Method for preparing battery (coin-type battery CBA) for evaluation

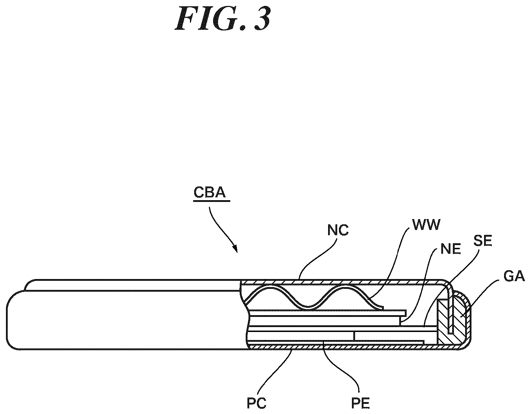

In a method for preparing a battery (coin-type battery CBA) for evaluation illustrated in Fig. 3, first, 52.5 mg of the above positive electrode active material, 15 mg of acetylene black, and 7.5 mg of polytetrafluoroethylene were weighed, mixed, and press-molded at a pressure of 100 MPa to a diameter of 11 mm and a thickness of 100 µm, thereby preparing a positive electrode PE (electrode for evaluation). Next, the prepared positive electrode PE was dried in a vacuum dryer at 120°C for 12 hours, and then a 2032 type coin-type battery CBA was prepared using the positive electrode PE in a glove box in an argon gas atmosphere with a dew point controlled at -80°C.

Metal lithium having a diameter of 17 mm and a thickness of 1 mm was used for a negative electrode NE. An equal volume mixed solution of ethylene carbonate (EC) containing 1 mol of LiClO₄ as a supporting electrolyte and diethyl carbonate (DEC) (manufactured by Tomiyama Pure Chemical Industries, Ltd.) was used for an electrolyte solution, and a polyethylene porous film having a film thickness of 25 µm was used for a separator SE. Note that, in the coin-type battery CBA, a gasket GA and a wave washer WW were disposed, and a positive electrode can PC and a negative electrode can NC were assembled into a coin-type battery.

### (2) Initial discharge capacity

As for an initial discharge capacity, the battery (coin-type battery CBA) for evaluation illustrated in Fig. 3 was left for about 24 hours after preparation thereof to stabilize an open_circuit_voltage (OCV), then a current density for the positive electrode was set to 0.1 mA/cm², and the battery was charged to a cutoff voltage of 4.3 V to determine an initial charge capacity, the battery was discharged to a cutoff voltage of 3.0 V after a pause of one hour, and a capacity at this time was determined as the initial discharge capacity. For the measurement, a multichannel voltage and current generator, R6741A (manufactured by Advantest Corporation), was used.

### (3) Positive electrode resistance

As for positive electrode resistance, Nyquist plot was obtained by preparing the battery (coin-type battery CBA) for evaluation illustrated in Fig. 3, charging the battery for evaluation at a charge potential of 4.1 V, and performing measurement by an AC impedance method using a frequency response analyzer and a potentiogalvanostat. This Nyquist plot is represented as a sum of characteristic curves indicating solution resistance, negative electrode resistance and a capacity thereof, and positive electrode resistance and a capacity thereof. By performing fitting calculation using an equivalent circuit on the basis of the Nyquist plot, the positive electrode resistance was calculated.

### Example 1

### (1) Formation of metal composite hydroxide (precursor)

First, 15 L of water was put into a 60 L reaction tank. The temperature in the tank was set to 40°C while stirring, and a mixed gas with an air-to-argon ratio of 1:6 was continuously caused to pass through the tank under stirring. As described above, by using a mixed gas of air, argon, and/or helium, secondary particles excellent in strength can be obtained.

Next, an appropriate amount of an alkaline solution (25% by mass sodium hydroxide aqueous solution) and an appropriate amount of an ammonium ion supplier (25% by mass ammonia water) were added to the water in the tank to prepare a reaction solution such that a pH (on the basis of a liquid temperature of 25°C, the same applies hereinafter) was 12.8 and an ammonium ion concentration was 10 g/L.

On the other hand, nickel sulfate hexahydrate, manganese sulfate monohydrate, and cobalt sulfate heptahydrate were weighed such that a composition ratio of nickel, manganese, and cobalt was Ni:Mn:Co = 50:30:20, and were dissolved in water such that a total concentration of nickel, manganese, and cobalt was 2 mol/L to prepare a raw material solution.

Then, the raw material solution was added to the reaction solution in the tank at 100 ml/min, and at the same time, the alkaline solution and the ammonium ion supplier were also added to the reaction solution at a constant rate. Crystallization was performed for one minute while the pH of the reaction solution was maintained at 12.8 (pH in nuclear generation process) and an ammonium ion concentration was maintained at 10 g/L, thereby performing nuclear generation.

The supply of the raw material solution, the alkaline solution, and the ammonium ion supplier was temporarily stopped. Thereafter, sulfuric acid was added until the pH of the reaction solution reached 11.6 (pH in a particle growth process). After the pH reached 11.6, the supply of the raw material solution, the alkaline solution, and the ammonium ion supplier was started again, and the crystallization was continued for 4.5 hours while the pH was maintained at 11.6 and the ammonium ion concentration was maintained at 10 g/L, thereby performing particle growth.

By the crystallization process, a slurry containing a nickel-manganese-cobalt composite hydroxide (Ni_{0.5}Mn_{0.3}Co_{0.2}(OH)₂) serving as a metal composite hydroxide (precursor) in which a core had the porous structure and a solid shell section had the solid structure was obtained.

The obtained slurry containing the metal composite hydroxide was put into a filter press and pressure-filtered to collect a metal composite hydroxide cake. The metal composite hydroxide cake was returned to the reaction tank, and the tank was filled with an alkali cleaning liquid (5% by mass sodium hydroxide aqueous solution) and stirred for 30 minutes to perform alkali cleaning. Thereafter, pressure filtration with the filter press was performed again to collect an alkali cleaned cake. This alkali cleaned cake was returned to the reaction tank, and the tank was filled with water and stirred for 30 minutes to perform finish cleaning. Thereafter, pressure filtration with the filter press was performed again to collect a cleaned cake.

The collected cleaned cake was dried at 150°C for five hours using an electric heating dryer to obtain a metal composite hydroxide.

The evaluation results of the obtained metal composite oxide are as presented in Table 1.

### (2) Formation of metal composite oxide (intermediate)

The obtained metal composite hydroxide (precursor) was heated at 450°C for two hours in an air (oxygen concentration: 21% by volume) flow to be calcined, and then heated at 600°C for five hours in an air (oxygen concentration: 21% by volume) flow to be oxidation-roasted, thereby obtaining a nickel-manganese-cobalt composite oxide (Ni_{0.5}Mn_{0.3}Co_{0.2}O) serving as a metal composite oxide (intermediate) in which a core had the porous structure and a shell section had the solid structure.

### (3) Manufacture of lithium-metal composite oxide (positive electrode active material)

The metal composite oxide (intermediate) obtained by oxidation roasting and lithium hydroxide, which is a lithium compound, were weighed such that a "ratio value (Li/Me)" which is a ratio between the number of atoms of lithium (Li) and the number of atoms of metals (Me) other than lithium was 1.03, and were sufficiently mixed to obtain a lithium mixture. This lithium mixture was heated at 450°C for ten hours in an oxygen (oxygen concentration: 100% by volume) flow to be calcined, and then heated at 860°C for five hours in an oxygen (oxygen concentration: 100% by volume) flow to be fired, thus obtaining a lithium fired product.

By crushing an aggregate contained in the lithium fired product, a lithium-nickel-manganese-cobalt composite oxide (Li_{1.03}Ni_{0.5}Mn_{0.3}Co_{0.2}O₂) serving as a positive electrode active material in which a core had the porous structure and a shell section had the solid structure was finally obtained.

The evaluation results of the obtained lithium-metal composite oxide are as presented in Table 1.

### Example 2

The same procedure as in Example 1 was performed except for the following conditions.

### [Formation of metal composite hydroxide (precursor)]

In the crystallization process, a mixed gas with the air-to-argon ratio of 1:4 was continuously caused to pass through the reaction tank under stirring, and crystallization was performed for 4.5 hours.

### [Formation of metal composite oxide (intermediate)]

The formation of a metal composite oxide (intermediate) was not carried out, and the metal composite hydroxide (precursor) was fired as a raw material.

The evaluation results of the obtained metal composite hydroxide and lithium-metal composite oxide are as presented in Table 1.

### Example 3

The same procedure as in Example 1 was performed except for the following conditions.

### [Formation of metal composite hydroxide (precursor)]

In the crystallization process, a mixed gas with the air-to-argon ratio of 1:2 was continuously caused to pass through the reaction tank under stirring, and crystallization was performed for 4.5 hours.

### [Formation of metal composite oxide (intermediate)]

The formation of a metal composite oxide (intermediate) was not carried out, and the metal composite hydroxide (precursor) was fired as a raw material.

The evaluation results of the obtained metal composite hydroxide and lithium-metal composite oxide are as presented in Table 1.

### (Comparative Example 1)

The same procedure as in Example 1 was performed except for the following conditions.

### [Formation of metal composite hydroxide (precursor)]

In the crystallization process, a mixed gas obtained by mixing air with nitrogen such that an oxygen concentration was 7% by volume was continuously caused to pass through the reaction tank under stirring, and crystallization was performed for 4.5 hours.

### [Formation of metal composite oxide (intermediate)]

The formation of a metal composite oxide (intermediate) was not carried out, and the metal composite hydroxide (precursor) was fired as a raw material.

The evaluation results of the obtained metal composite hydroxide and lithium-metal composite oxide were as presented in Table 1.

### (Comparative Example 2)

The same procedure as in Example 1 was performed except for the following conditions.

### [Formation of metal composite hydroxide (precursor)]

In the crystallization process, first, the inside of the reaction tank was controlled to a non-oxidizing atmosphere having an oxygen concentration of 0.1% by volume under stirring, and nuclear generation was performed while a gas in a gas phase portion was taken into a liquid phase portion. Thereafter, crystallization in the non-oxidizing atmosphere was continued for 0.9 hours to perform particle growth.

Next, the supply of the raw material solution, the alkaline solution, and the ammonium ion supplier was stopped, the inside of the reaction tank was switched to an oxidizing atmosphere (air atmosphere) under stirring. The supply of the raw material solution, the alkaline solution, and the ammonium ion supplier was started again, and crystallization in the oxidizing atmosphere was performed for 0.9 hours.

Thereafter, switching between crystallization in the non-oxidizing atmosphere and crystallization in the oxidizing atmosphere as described above was performed three times (four times in total, namely, non-oxidation → oxidation → non-oxidation → oxidation → non-oxidation).

### [Formation of metal composite oxide (intermediate)]

The formation of a metal composite oxide (intermediate) was not carried out, and the metal composite hydroxide (precursor) was fired as a raw material.

The evaluation results of the obtained metal composite hydroxide and lithium-metal composite oxide are as presented in Table 1.

**[Table 1]**

| | Gas introduction during crystallization | Precursor | | | | | | | | Positive electrode active material | | |
|---|---|---|---|---|---|---|---|---|---|---|---|---|
| | | Particle structure | | Pore volume [ml/g] | Average pore size [nm] | Average particle size [µm] | Specific surface area [m²/g] | Tap density [g/cm³] | Oil absorption amount [ml/100 g] | Particle strength [MPa] | Initial discharge capacity [mAh/g] | Positive electrode resistance [Ω] |
| | | Core | Shell | | | | | | | | | |
| Example 1 | Mixed gas of air and argon (Air : Argon =1 : 6) | Porous | Solid | 0.21 | 12.0 | 6.8 | 38 | 1.0 | 44 | 32 | 147 | 3.3 |
| Example 2 | Mixed gas of air and argon (Air : Argon = 1 : 4) | Porous | Solid | 0.30 | 13.7 | 7.0 | 45 | 0.9 | 57 | 23 | 159 | 3.1 |
| Example 3 | Mixed gas of air and argon (Air : Argon = 1 : 2) | Porous | Solid | 0.41 | 14.5 | 6.9 | 52 | 0.8 | 66 | 14 | 168 | 3.5 |
| Comparative Example 1 | Mixed gas of air and nitrogen (Oxygen concentration: 7% by volume) | Porous | Solid | 0.16 | 10.7 | 6.2 | 18 | 1.2 | 37 | 9 | 141 | 4.8 |
| Comparative Example 2 | Air and nitrogen are sequentially switched | No core/shell Porous | | 0.18 | 11.4 | 5.5 | 34 | 1.1 | 71 | 7 | 166 | 4.6 |

### [Overall evaluation]

The lithium-metal composite oxides (positive electrode active materials) obtained in Examples 1 to 3, which were each prepared using a precursor and an intermediate of a positive electrode active material for a lithium ion secondary battery within the scope of the present invention, were confirmed to have excellent particle strength in all cases, as compared with the lithium-metal composite oxides obtained in Comparative Examples 1 and 2, which used those deviating from the scope of the present invention.

In addition, it was also confirmed that the lithium-metal composite oxides of Examples 1 to 3, when each used in a lithium ion secondary battery, they exhibited the initial discharge capacity equal to or greater, in consideration of the overall porosity, and positive electrode resistance lower, as compared with those of the lithium-metal composite oxides of Comparative Examples 1 and 2. Note that, in Comparative Example 1, the secondary particle of the lithium-metal composite oxide was formed of a core having the porous structure and a shell section having the solid structure as in Examples 1 to 3, however, the particle strength was not improved. As a reason for this, it is considered that there is a large problem in atmosphere control (composition of a mixed gas or the like) in the reaction tank in the crystallization process.

In addition, the technical scope of the present invention is not limited to the aspects described in the above embodiment and the like. One or more of the requirements described in the above embodiment and the like may be omitted. Note that the requirements described in the above embodiment and the like can be appropriately combined. Furthermore, contents of all documents cited in the present specification are incorporated and form a part of the description of the present text as long as it is permitted by law.

### Reference Signs List

- CBA: Coin-type battery (for evaluation)
- PE: Positive electrode (electrode for evaluation)
- NE: Negative electrode
- SE: Separator
- GA: Gasket
- WW: Wave washer
- PC: Positive electrode can
- NC: Negative electrode can

## Claims

1. A precursor of a positive electrode active material for a lithium ion secondary battery, the positive electrode active material comprising a lithium-metal composite oxide that is composed of secondary particles formed by aggregation of primary particles or both the primary particles and the secondary particles, wherein
the precursor is a metal composite hydroxide composed of the secondary particles formed by aggregation of the primary particles or both the primary particles and the secondary particles,
the secondary particles each have a core occupying an inside of the secondary particle and a shell section surrounding the core and covering an outside thereof,
the core has a porous structure and the shell section has a solid structure,
the metal composite hydroxide contains nickel, manganese, and cobalt, and
the metal composite hydroxide has a pore volume of 0.2 to 0.5 ml/g and an average pore size of 11.5 to 15.0 nm.

2. The precursor of a positive electrode active material for a lithium ion secondary battery according to claim 1, wherein
in a particle structure observed by imaging a cross section of the secondary particle in the metal composite hydroxide,
the porous structure exhibits a cross-sectional state in which two or more pores are present in the cross section of the particle, and
the solid structure exhibits a cross-sectional state in which the cross section of the particle is in a filled state.

3. The precursor of a positive electrode active material for a lithium ion secondary battery according to claim 1 or 2, wherein the metal composite hydroxide has an average particle size of 3 to 8 µm.

4. The precursor of a positive electrode active material for a lithium ion secondary battery according to claim 1 or 2, wherein the metal composite hydroxide has a specific surface area of 35 to 55 m²/g, a tap density of 0.5 to 1 g/cm³, and an oil absorption amount of 40 to 70 ml/100 g.

5. The precursor of a positive electrode active material for a lithium ion secondary battery according to claim 1 or 2, wherein the metal composite hydroxide is represented by a general formula A: Ni_{1-x-y-z}MnₓCo_{y}M_{z}(OH)_{2+α} (0.01 ≤ x ≤ 0.5, 0.01 ≤ y ≤ 0.5, 0 ≤ z ≤ 0.1, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S).

6. An intermediate of a positive electrode active material for a lithium ion secondary battery, the positive electrode active material comprising a lithium-metal composite oxide that is composed of secondary particles formed by aggregation of primary particles or both the primary particles and the secondary particles, wherein
the intermediate is a metal composite oxide composed of the secondary particles formed by aggregation of the primary particles or both the primary particles and the secondary particles,
the secondary particles each have a core occupying an inside of the secondary particle and a shell section surrounding the core and covering an outside thereof,
the core has a porous structure and the shell section has a solid structure, and
the metal composite oxide is represented by a general formula B: Ni_{1-x-y-z}MnₓCo_{y}M_{z}O_{1+α} (0.01 ≤ x ≤ 0.5, 0.01 ≤ y ≤ 0.5, 0 ≤ z ≤ 0.1, and -0.1 ≤ α ≤ 0.2 are satisfied, and M includes one or more elements selected from W, Mo, V, Ca, Mg, Sr, Ba, Ti, Cr, Zr, Al, Nb, Ta, Si, P, B, and S).
